# EUROPEAN PATENT SPECIFICATION

(11) **EP 0 748 426 B1**
(45) Date of publication and mention of the grant of the patent: **29.04.1998**
(21) Application number: 93901326.4
(22) Date of filing: 11.12.1992
(51) Int. Cl.: F16K 11/076, F16K 11/078

(54) **A BALL VALVE CARTRIDGE FOR A MIXER VALVE AND A FAUCET MIXER VALVE**
EINE KUGELVENTILKARTUSCHE FÜR EIN MISCHVENTIL UND EIN HAHNMISCHVENTIL
CLAPET A BILLE EN FORME DE CARTOUCHE, ET UNE VANNE SANITAIRE

(43) Date of publication of application: 18.12.1996
(73) Proprietor: MASCO CORPORATION, Taylor, MI 48180 (US)
(72) Inventor: KNAPP, Alfons, D-Biberach/Riss (DE)
(74) Representative: Oppermann, Ewald, Dipl.-Ing.
(86) International application number: US9210739
(87) International publication number: WO9413985

(56) References cited:
- US-A- 2 592 062
- US-A- 3 915 195
- US-A- 4 043 359
- US-A- 4 200 123
- US-A- 5 018 553
- US-A- 5 040 566

## Description

### TECHNICAL FIELD

The present invention relates to a ball valve cartridge for a mixer valve and to a faucet mixer valve incorporating a movable valve element, according to the preamble portion of claim 11 which is formed by, e.g., document US-A- 5,018,553.

### BACKGROUND OF THE DISCLOSURE

Single handle faucets, commonly referred to as mixer valves, that control both hot and cold water flow have seen vast consumer acceptance. These faucets are commonly constructed such that a handle or knob is movable in two distinct directions to adjust the mix of hot and cold water and to adjust the volume or flow rate.

The two basic types of mixer valves that have seen widest commercial acceptance are plate valves and ball valves. While ball valves offer a reliable one piece construction that is durable and easily assembled, plate valves offer a drive mechanism that allows motion of the handle in two desirable directions that appears to be universally accepted by the consumer. This desirable handle motion allows for an orbiting motion of the handle about a fixed longitudinal axis of the valve body and a rocking, i.e. pivoting, motion about a movable horizontal axis relative to the valve body. The horizontal axis is fixed with respect to the handle and is perpendicular to the longitudinal axis of the valve body. The one distinguishing characteristic of this type of handle motion is that when the handle is pivoted to an off position, the desired mix ratio of hot and cold water can be remembered by the location of the handle so that when the faucet is turned back on, the same mix of hot and cold water flows through the faucet.

Recently, ball valves have been devised that allow the handle to be operated in the same fashion as the commercially accepted plate type mixer valve. These ball type mixer valves require the introduction of another moving part in the form of a rotatable plate mounted above the ball valve element. Furthermore, these ball valves have been combined with plate devices which can be adjustably positioned about a cover opening through which the handle controls the ball valve to limit the total flow rate. Alternately or in addition, these limiting devices limit the maximum ratio of hot water to cold water and consequentially the maximum temperature of the mixed water at the outlet.

Various disadvantages exist with a ball valve construction. In particular, the ball valve element is mounted between elastomeric inlet seals positioned about the inlet ports of the valve body and a sealing gasket that is mounted under the valve cover or cap. The elastomeric inlet seals and gasket are all yielding and render a floating characteristic to the ball valve element between the valve body and cap. There is no positive lock or locator mechanism that securely positions the ball valve in place. Because the ball valve can be moved in a translational manner against the elastomeric elements, the operator when operating the handle can also move the handle a small amount in any direction including directions not contemplated in the design of the mixing valve. This unwanted motion renders a undesirable spongy feel to the operation of the faucet and an uncertainty to the operator as to the proper operation of the faucet. Furthermore, the spongy feel of the handle gives the impression that the handle is unstable and not assembled properly.

The top sealing gasket provides three functions. Firstly, it seals against leakage of water about the ball. Secondly, its outer periphery seals against the inner surface of the housing to prevent leakage. Thirdly, the gasket resiliently positions the ball downwardly against the inlet seals. As a consequence, the gasket is an expensive component due to its mass and shape.

In order to reduce the floating feel, a regulation ring has been incorporated in many ball valve mixing valves. The regulation ring is adjustably screwed onto the valve cap. The regulation ring pushes the sealing gasket downward against the ball valve element which in turn is pressed against the inlet seals. The downward placement of the sealing gasket and ball valve element reduces the undesirable motion but does not eliminate it. Furthermore, the combining of the regulation ring with the known gasket increases the cost and complexity of the mixing valve.

Plate valves have often been incorporated into a cartridge format. The cartridge houses the movable and fixed plate. The cartridge can easily removed and replaced with another in order to effect an easy repair to the faucet. Ball valves have not been amenable to a faucet construction. Firstly, the floating nature of the traditional ball valve demanded that any cartridge completely surround and capture the ball valve, otherwise the ball valve will simply fall out of the bottom of the cartridge. Secondly, the compact nature of the ball valve construction leaves little room for the inclusion of a cartridge. The introduction of traditional cartridges that house and capture the ball into the faucet housing demands that the housing be made taller to incorporate the added height needed for the inclusion of the cartridge.

What is needed is a ball valve cartridge for a mixer valve that houses the upper sealing elements that seal against leakage to the exterior of the housing and seats a ball valve element. What is also needed is a ball valve cartridge that includes a ball valve element that duplicates the handle motion of known plate valves that provide for swinging of the handle about the longitudinal axis of the valve body while retaining the advantage of having only one movable piece to operate the valve, in other words, without the introduction of a separate moving part. What is also needed is a ball valve assembly that eliminates the need for a regulation ring and provides for a valve that eliminates the possibility of the handle moving in a fashion that is different from that needed for its proper operation.

Accordingly, the object of the present invention is to provide a small ball valve cartridge for a mixer valve and a faucet mixer valve, respectively, the construction of which is simplified.

### SUMMARY OF THE DISCLOSURE

The above object is solved by the features indicated in claims 1 and 11, respectively. Advantageously developed embodiments of the invention are subject-matter of the dependent claims 2 to 10 and 12, respectively.

In this fashion, a valve element is incorporated into a valve cartridge without necessitating an increase in the overall height of the valve body. Furthermore, the seals that prevent leakage about the movable valve element and cartridge can have a minimal size and weight because the seals no longer have the double function of biasing and positioning the movable valve element against the inlet seal elements.

### BRIEF DESCRIPTION OF THE DRAWINGS

Reference now is made to the accompanying drawings in which:
Figure 1 is a side elevational and segmented view of a mixer valve illustrating one embodiment of the invention;
Figure 2 is an exploded perspective view of the mixer valve shown in figure 1;
Figure 3 is a cross sectional view of the mixer valve lower body member taken along line 3-3 shown in figure 2;
Figure 4 is a bottom elevational view of the cartridge shown in figure 2;
Figure 5 is a top plan view of the cartridge housing shown in figure 2; and
Figure 6 is a cross-sectional view of the gasket shown in figure 1 in an unloaded condition.

### DETAILED DESCRIPTION OF THE PREFERRED EMBODIMENT

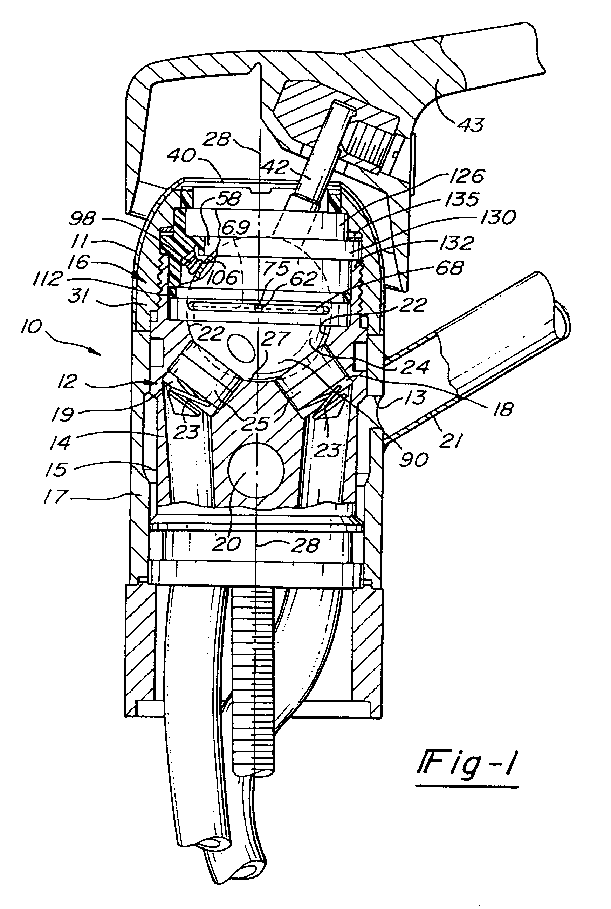

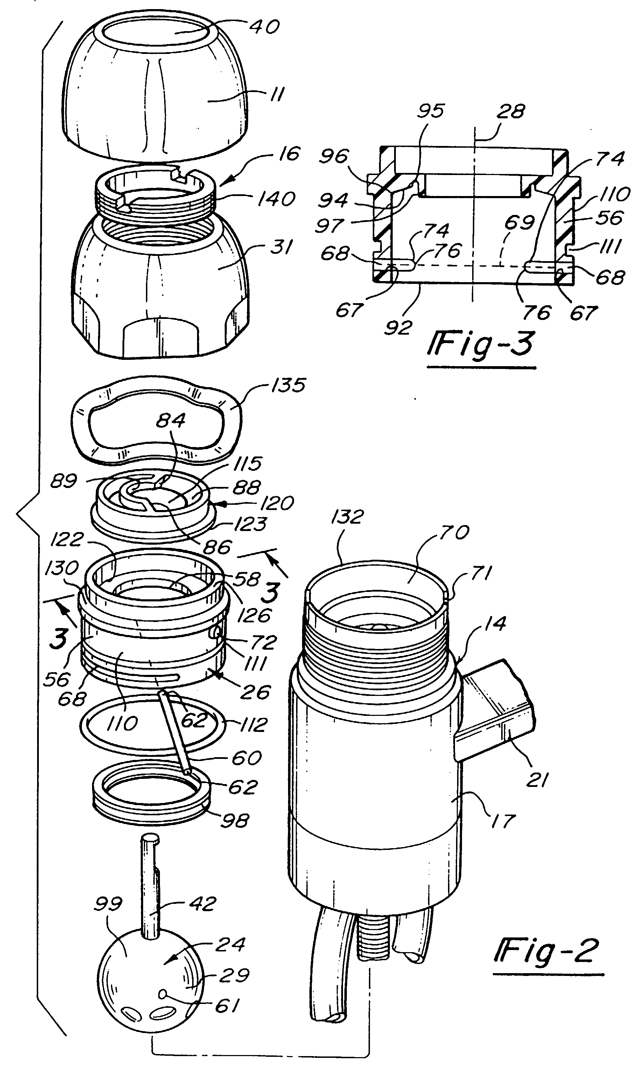

Referring to Figures 1 and 2, a mixer valve 10 includes a valve housing 12 that is formed from a lower base member 14 and a cover assembly 16. The base member 14 has a cavity 22 formed therein with two inlet ports 18 and 19 for cold and hot water, and has an outlet port 20 for the passage of mixed water in communication with cavity 22. The downstream ends of ports 18 and 19 are counter-bored to form a seat for two biasing springs 23 which bias tubular elastomeric sealing elements 25 against the ball valve element 24. The holes therethrough have a diameter of approximately 6.5 mm. The ports 18 and 19 have there downstream ends positioned at approximately 40° up from the bottom point 27 of cavity 22. Furthermore, the ports 18 and 19 are circumferentially positioned approximately 15° from the fore and aft plane as measured from the vertical axis 28.

A tubular shell 17 is sealingly and slidably mounted about the lower base member 14 and forms an annular chamber 15 in fluid communication with the outlet port 20. A spout 21 is affixed to the shell 17 and in fluid communication with the annular chamber 15 through aperture 13 in shell 17.

The cover assembly 16 includes a threaded member 31 that is screwed onto the base member 14. A cosmetic shell 11 is positioned over the member 31. The valve cavity 22 has a substantially semi-spherical lower surface sized to receive a ball valve element 24 that is housed in a cartridge 26. The cover assembly 16 affixes the cartridge 26 in the cavity 22. The base member 14 has an upright collar flange 70 with a keyed slot 71 that receives a key 72 of cartridge 26 to correctly orient the cartridge 26 in the mixer valve 10.

The ball valve element 24 has a substantially spherical valve surface 29 with cold inlet openings 30 and 32, hot inlet openings 34 and 36, and outlet opening 38 therethrough. The openings 30 and 32 cooperate with the cold inlet port 18, openings 34 and 36 cooperate with hot inlet port 19, and outlet opening 38 cooperates with outlet port 20 to regulate the passage of water from the two inlet ports 18 and 19 to the outlet port 20 by regulating the mixture ratio from the two inlet ports 18 and 19 and the flow rate, i.e. volume of total water per unit time.

The cover assembly 16 has a control opening 40 therethrough. The cover assembly 16 is positioned such that the longitudinal axis 28 of the valve housing 12 passes through the control opening 40. The cartridge 26 includes a housing member 56 that has an upper opening 58 aligned under control opening 40.

A control stem 42 is fixedly connected to the ball valve element 24. The control stem 42 extends through the control opening 40. The control stem 42 is constructed to be attached to a faucet handle 43 in a conventional fashion.

The ball valve element 24 is pivotably mounted to the cartridge housing member 56. The housing member 56 may be manufactured from known plastic material suitable for faucet applications. The ball valve element 24 also has a cylindrical pin 60 extending therethrough with its distal ends 62 extending to the exterior of ball valve surface 29. Holes 61 are sized to slidably receive the pin 60. The pin 60 is positioned to intersect the center 66 of ball valve 24 and lie perpendicular to control stem 42. The pin 60 can be welded in place as described in more detail later.

Each distal end 62 is positioned in a circumferentially disposed slot 68 formed in the cartridge housin member 56. Each slot 68 has a central axis disposed in a plane 69 perpendicular to axis 28. Because the ends 62 are cylindrical in shape, they have a circular cross-section that allows them to pivot in slots 68 about an axis 75 that is perpendicular to axis 28.

The circumferential ends 74 of the slots 68 form stop shoulders 76 for the distal ends 62. The slots 68 are vertically dimensioned to form only enough clearance to allow sliding movement of the pin ends 62 in slot 68. Desirably no vertical spacing exists between slot 68 and the ends 62.

The ball valve element 24 has a lower section 90 of the valve surface 29 protruding through the large lower open end 92 of the cartridge housing member 56. The protruding section 90 is a significant portion of the ball valve element 24. Approximately just under half of the spherical valve surface 29 protrudes under the cartridge lower opening 92 at any given time. The valve surface 29 with the openings 30, 32, 34, and 36 operably abuts the spring biased sealing elements 25.

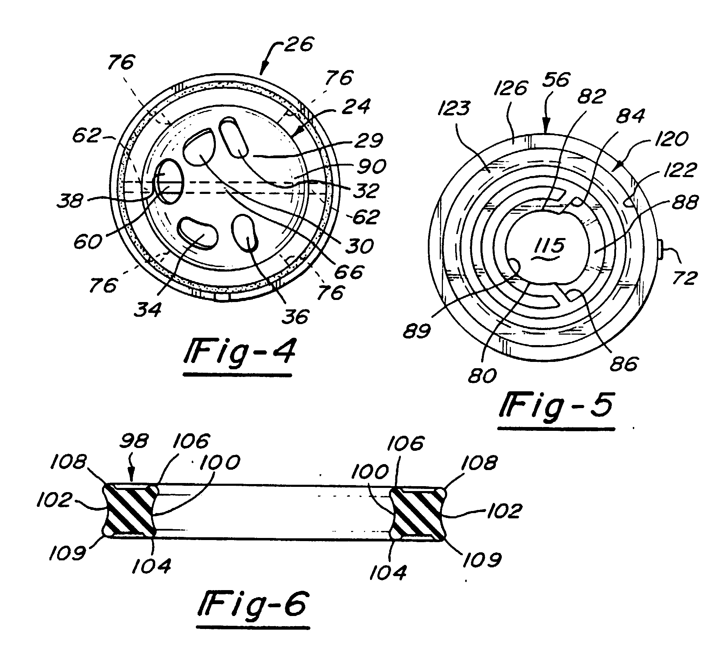

An annular gasket seat 94 is positioned about the upper opening 58 and faces ball valve element 24. The gasket seat 94 is canted with its inner periphery 95 positioned higher than its outer periphery 96. A downwardly depending shoulder 97 vertically depends at the inner periphery 95. An annular gasket seal ring 98 is mounted in the cartridge housing member 56 against the seat 94 such that it is placed under a preload with its inner periphery 100 twisted to be higher than its outer periphery 102. The gasket seal ring 98 has four rounded peripheral lip sections 104, 106, 108, and 109. One of the lips 104 abuts the ball valve element 24 and provides a seal therebetween against leakage of water. The upper lips 106 and 108 abut the canted seat 94 with inner lip 106 being positioned higher than outer lip 108. The gasket seal ring 98 is shown in figure 6 in the unloaded position with the lips 106 and 108 being horizontally aligned. The upper section 99 of valve surface 29 that abuts gasket seal ring 98 is properly polished to the appropriate smoothness to provide a proper seal with the gasket.

The outer periphery 110 of the cartridge housing member 56 has an annular groove 111 which seats an O-ring 112. The O-ring 112 is sized to seal the cartridge outer periphery 110 with the cavity 22 in lower base member 14 of housing 12.

Rocking of the control stem 42 along a lane containing the longitudinal axis 28 pivots the ball valve element 24 about the pivot axis 75 independently of the rotated position of the ball valve element 24 about axis 28. Furthermore, the distal ends 62 may slide along slots 68 to allow the ball valve element 24 to rotate about axis 28 when the control stem 42 is swung about the longitudinal axis 28.

The rotation of the ball valve element 24 about axis 28 is limited by the position of the stop shoulders 76 that abut the distal ends 62. Mixer valves having different applications may have different rotation angles established by the circumferentially positioning of stop shoulders 76. The rotation of the ball valve element 24 as illustrated adjusts the ratio mix and thus the temperature of the discharged mixed water.

Alternately, or in addition to the stop shoulders 76, the rotation of the ball valve element 24 about axis 28 may also be limited by radially extending edges 80, 82, 84, and 86 of upper aperture 115 in guide template 120 that fits within upper recess 122 about opening 58 in cartridge housing member 56 as shown in figure 5. Recess 122 is surrounded by an annular retaining collar 126. The control stem 42 when it abuts the edges 80-86 is prevented from further movement beyond the respective edges. Edges 80 and 82 define the cold limit and edges 84 and 86 define the hot limit. The edges 80-86 allow the ball valve element 24 to rotate about vertical axis 28 for approximately 90°.

The upper opening 58 also has circumferential edges 88 and 89 that control the extent of rocking motion about axis 75 of pin 60 from the off position to the full on position respectively.

The cartridge 26 is assembled with the gaskets 98 and 112 properly seated. Ball valve element 24 is then positioned against gasket 98 and slightly pressed to bias the gasket 98. The pin 60 is then passed through the slots 68 and holes 61 in valve surface 29. The bias of the gasket 98 onto the ball valve element 24 provides a frictional fit of the pin ends 62 onto the lower surface 67 of each slot 68 that prevents the pin 60 from falling out. Template 120 is then placed in recess 122. The template 120 has an outer thin flange 123 that can be either press fitted or snap fitted in recess 122. The assembled cartridge 26 is a self contained assembly that can be sold separately as a repair replacement for later installation into the faucet mixer valve 10.

The assembled cartridge 26 is placed in cavity 22 of the base member 14. The slot 71 properly positions the cartridge 26 in the cavity 22 and ledge 130 properly vertically positions the cartridge 26 on a corresponding ledge 132 in base member 14. Cover assembly 16 is then threaded onto the upright flange 70 with a spring loaded corrugated ring 135 interposed between the cartridge 26 and cover assembly 16 to downwardly bias the cartridge 26 against ledge 132.

The minimum clearance between ends 62 of pin 60 and slots 68 in the vertical direction prevents vertical displacement of the ball valve element 24 with respect to the valve housing 12 and cartridge housing member 56. Consequently, the control stem 42 does not show any instability or render a spongy feel to the operator when the ball valve element 24 is pivoted along its two prescribed pivotable directions.

The need for a large resilient biasing regulation ring intended to push down the ball 24 against the spring biased sealing elements 25 is eliminated. Gasket seal ring 98 functions solely to prevent leakage between the ball valve element 24 and cartridge housing member 56. The O-ring 112 functions solely to prevent leakage between the cartridge housing member 56 and lower base member 14. The vertical position of the ball valve element 24 is affixed within the cartridge housing member 56 by the pin 60 and slots 68. Furthermore, any adjustment ring 140 member that has previous been needed to provide proper bias of the ball valve element 24 against seal elements 25 becomes optional.

Furthermore, the ball valve element 24 is incorporated into an easily replaceable valve cartridge 26 without necessitating an increase in the overall height of the valve housing 12 as compared to prior art mixing valves incorporating ball valve elements. Furthermore, the cartridge is retrofittable or usable in the standard base member 14 that has previously been fitted with ball valves found in the prior art if the ball valve has the properly designed inlets and outlet.

## Claims

1. A ball valve cartridge (26) for a mixer valve (10), said cartridge (26) comprising
a ball valve element (24) having at least one inlet (30, 32, 34, 36) and an outlet (38),
a cartridge housing (56) having an upper opening (58) for allowing a control stem (42) passing therethrough to be connectable to said ball valve element (24),
means (62, 68) for seating said ball valve element (24) movable within said cartridge housing (56),
said cartridge (26) having a lower opening (92) through which said ball valve element (24) protrudes, said cartridge (26) being removably installable in a cavity (22) of said mixer valve (10) as a single unit with said ball valve element (24) remaining interconnected with said cartridge housing (56), said ball valve element (24) being seatable in proximity to inlet ports (18, 19) within said mixer valve (10) below said cartridge (26) such that its at least one inlet (30, 32, 34, 36) is selectively alignable or misalignable with said inlet port (18, 19).

2. A ball valve cartridge (26) according to claim 1, wherein said means for seating said ball valve element (24) include protrusions (62) extending from circumferentially opposite sides of said ball valve element (24) engageable in at least one circumferentially extending slot (68) within said cartridge (26).

3. A ball valve cartridge (26) according to claim 2, wherein said protrusions (62) are formed by a pin (60) extending through said ball valve element (24).

4. A ball valve cartridge (26) according to claim 3, wherein said pin (60) has a frictional fit with a lower surface (67) of said at least one circumferentially extending slot (68).

5. A ball valve cartidge (26) according to one of the preceding claims, wherein said cartridge housing (56) has a seal seat (94) about said upper opening (58), a sealing gasket (98) being seated in said seal seat (94), which is sealingly abuttable against said ball valve element (24).

6. A ball valve cartridge (26) according to claim 5, wherein said sealing gasket (98) has a radially inwardly facing lip (104) that sealingly abuts said ball valve element (24).

7. A ball valve cartridge (26) according to claim 6, wherein said sealing gasket (98) is preloaded such that said lip (104) is biased against said ball valve element (24).

8. A ball valve cartridge (26) according to one of the claims 5 to 7, wherein said seal seat (94) is canted with its inner periphery (95) positioned above its outer periphery (96), and wherein said sealing gasket (98) has an unloaded position in which its inner and outer periphery (100, 102) are approximately coplaner, said sealing gasket (98), when preloaded, being twisted such that said gasket inner periphery (100) is above its outer periphery (102), and seated in said canted seal seat (94).

9. A ball valve cartridge (26) according to one of the preceding claims, wherein said cartridge housing (56) has an outer sealing ring (112) thereabout for preventing leakage about said cartridge (26).

10. A ball valve cartridge (26) according to one of the preceding claims, further comprising a template member (120) mounted in an upper recess (122) in said cartridge housing (56) in proximity to said upper opening (58) to limit rocking motion and orbiting motion of said control stem (42).

11. A faucet mixer valve (10) having a movable valve element (24) mounted in a housing (12) that defines a cavity (22), said housing (12) having a plurality of inlet ports (18, 19) and an outlet port (20) in fluid communication with said cavity (22), said valve element (24) cooperating with said inlet ports (18, 19) to control liquid flow in both flow rate and temperature mix through said ports, said housing (12) having a control opening (40) therethrough, said valve element (24) having a control stem (42) connected thereto and extending through said control opening (40), **characterized by**
said mixer valve (10) being in cartridge form with a cartridge (26) having a housing member (56),
said housing member (56) having an upper opening (58) for allowing said control stem (42) passing therethrough,
means (60, 68) for seating said movable valve element (24) to said housing member (56),
said cartridge (26) having a lower opening (92) through which said movable valve element (24) protrudes to be cooperative to said inlet ports (18, 19),
said housing member (56) having a seal seat (94) about said upper opening (58),
a sealing gasket (98) seated in said seal seat (94) about said upper opening (58) in said housing member (56) and sealingly abuttable against said movable valve element (24).

12. A faucet mixer valve (10) according to claim 11, characterized in that said mixer valve (10) is in a ball valve cartridge form with a ball valve cartridge (26) according to one of the claims 1 to 10.

## Patentansprüche

1. Kugelventilkartusche (26) für ein Mischventil (10), wobei die Kartusche (26) umfaßt
ein Kugelventilelement (24), das mindestens einen Einlaß (30, 32, 34, 36) und einen Auslaß (38) hat,
ein Kartuschengehäuse (56), welches eine obere Öffnung (58) zum Ermöglichen der Hindurchführung eines Steuerschafts (42) hat, um an das Kugelventilelement (24) anschließbar zu sein,
Mittel (62, 68) zum bewegbaren Auflagern des Kugelventilelements (24) in dem Kartuschengehäuse (56),
wobei die Kartusche (26) eine untere Öffnung (92) hat, durch welche das Kugelventilelement (24) vorsteht, wobei die Kartusche (26) als eine einzelne Einheit auswechselbar in einem Hohlraum (22) des Mischventils (10) einbaubar ist, während das Kugelventilelement (24) mit dem Kartuschengehäuse (56) verbunden bleibt, wobei das Kugelventilelement (24) in der Nähe von Einlaßöffnungen (18, 19) in dem Mischventil (10) unterhalb der Kartusche (26) auflagerbar ist, so daß sein mindestens einer Einlaß (30, 32, 34, 36) wahlweise mit der Einlaßöffnung (18, 19) in Ausrichtung oder außer Ausrichtung bringbar ist.

2. Kugelventilkartusche (26) nach Anspruch 1, wobei die Mittel zum Auflagern des Kugelventilelements (24) Vorsprünge (62) besitzen, die sich von in Umfangsrichtung entgegengesetzten Seiten des Kugelventilelements (24) weg erstrecken und in mindestens einem sich in Umfangsrichtung erstreckenden Schlitz (68) in der Kartusche (26) in Eingriff bringbar sind.

3. Kugelventilkartusche (26) nach Anspruch 2, wobei die Vorsprünge (62) durch einen Stift (60) ausgebildet sind, der sich durch das Kugelventilelement (24) hindurch erstreckt.

4. Kugelventilkartusche (26) nach Anspruch 3, wobei sich der Stift (60) in Reibeingriff mit einer unteren Fläche (67) des mindestens einen sich in Umfangsrichtung erstreckenden Schlitzes (68) befindet.

5. Kugelventilkartusche (26) nach einem der vorhergehenden Ansprüche, wobei das Kartuschengehäuse (56) um die obere Öffnung (58) herum einen Dichtungssitz (94) hat, wobei in dem Dichtungssitz (94) eine Dichtungsmanschette (98) sitzt, die gegen das Kugelventilelement (24) dichtend in Anlage bringbar ist.

6. Kugelventilkartusche (26) nach Anspruch 5, wobei die Dichtungsmanschette (98) eine radial nach innen gewandte Lippe (104) hat, die an dem Kugelventilelement (24) dichtend anliegt.

7. Kugelventilkartusche (26) nach Anspruch 6, wobei die Dichtungsmanschette (98) vorgespannt ist, so daß die Lippe (104) gegen das Kugelventilelement (24) gedrückt ist.

8. Kugelventilkartusche (26) nach einem der Ansprüche 5 bis 7, wobei der Dichtungssitz (94) so angeschrägt ist, daß sein Innenumfang (95) oberhalb seines Außenumfangs (96) angeordnet ist, und wobei die Dichtungsmanschette (98) eine unbelastete Stellung hat, in der ihre Innen- und Außenumfänge (100, 102) annähernd koplanar sind, wobei die Dichtungsmanschette (98) unter Vorspannung verwunden ist, so daß der Innenumfang (100) der Manschette oberhalb ihres Außenumfangs (102) liegt, und in dem angeschrägten Dichtungssitz (94) sitzt.

9. Kugelventilkartusche (26) nach einem der vorhergehenden Ansprüche, wobei das Kartuschengehäuse (56) um sich herum einen äußeren Dichtungsring (112) hat, um Leckage um die Kartusche (26) herum zu verhindern.

10. Kugelventilkartusche (26) nach einem der vorhergehenden Ansprüche, die weiterhin ein Kulissenteil (120) aufweist, das in einer oberen Aussparung (122) in dem Kartuschengehäuse (56) in der Nähe der oberen Öffnung (58) angebracht ist, um die Schwenkbewegung und die Kreisbewegung des Steuerschafts (42) zu begrenzen.

11. Hahnmischventil (10) mit einem bewegbaren Ventilelement (24), das in einem Gehäuse (12) angebracht ist, welches einen Hohlraum begrenzt (22), wobei das Gehäuse (12) eine Mehrzahl von Einlaßöffnungen (18, 19) und eine Auslaßöffnung (20) hat, die mit dem Hohlraum (22) in Flüssigkeitsverbindung stehen, wobei das Ventilelement (24) mit den Einlaßöffnungen (18, 19) zusammenwirkt, um den Flüssigkeitsstrom durch die Öffnungen sowohl in der Durchflußmenge als auch in der Temperaturmischung einzustellen, wobei das Gehäuse (12) eine durch es hindurch geführte Steueröffnung (40) hat, wobei das Ventilelement (24) einen Steuerschaft (42) aufweist, der daran angeschlossen ist und sich durch die Steueröffnung (40) hindurch erstreckt, **dadurch gekennzeichnet, daß**
das Mischventil (10) eine Kartuschenform aufweist, mit einer Kartusche (26), die ein Gehäuseteil (56) hat,
wobei das Gehäuseteil (56) eine obere Öffnung (58) zum Ermöglichen der Hindurchführung des Steuerschafts (42) aufweist,
wobei Mittel (60, 68) zum Auflagern des beweglichen Ventilelements (24) an dem Gehäuseteil (56) vorgesehen sind,
wobei die Kartusche (26) eine untere Öffnung (92) hat, durch die das bewegbare Ventilelement (24) vorsteht, um mit den Einlaßöffnungen (18, 19) zusammenzuwirken,
wobei das Gehäuseteil (56) um die obere Öffnung (58) herum einen Dichtungssitz (94) aufweist,
wobei eine Dichtungsmanschette (98) um die obere Öffnung (58) in dem Gehäuseteil (56) herum in dem Dichtungssitz (94) sitzt und gegen das bewegbare Ventilelement (24) dichtend in Anlage bringbar ist.

12. Hahnmischventil (10) nach Anspruch 11, dadurch gekennzeichnet, daß das Mischventil (10) eine Kugelventilkartuschenform aufweist, mit einer Kugelventilkartusche (26) nach einem der Ansprüche 1 bis 10.

## Revendications

1. Cartouche de vanne à boisseau sphérique (26) pour vanne mitigeuse ou mitigeur (10), ladite cartouche (26) comportant
un élément de vanne à boisseau sphérique (24) ayant au moins une entrée (30, 32, 34, 36) et une sortie (38),
un boîtier de cartouche (56) ayant une ouverture supérieure (58) pour permettre à une tige de commande (42) de passer à travers pour pouvoir être reliée audit élément de vanne à boisseau sphérique (24)
des moyens (62, 68) pour mettre en place ledit élément de vanne à boisseau sphérique (24) mobile dans ledit boîtier de cartouche (56),
ladite cartouche (26) ayant une ouverture inférieure (92) à travers laquelle fait saillie ledit élément de vanne à boisseau sphérique (24), ladite cartouche (26) pouvant être installée de manière amovible dans une cavité (22) dudit mitigeur (10) sous la forme d'une seule unité, ledit élément de vanne à boisseau sphérique (24) restant relié de manière mutuelle audit boîtier de cartouche (56), ledit élément de vanne à boisseau sphérique (24) pouvant être mis en place à proximité d'orifices d'entrée (18, 19) dans ledit mitigeur (10) en dessous de ladite cartouche (26) de sorte que sa au moins une entrée (30, 32, 34, 36) peut être alignée ou désalignée de manière sélective par rapport audit orifice d'entrée (18, 19).

2. Cartouche pour vanne à boisseau sphérique (26) selon la revendication 1, dans laquelle lesdits moyens pour mettre en place ledit élément de vanne à boisseau sphérique (24) comportent des saillies (62) s'étendant à partir des côtés circonférentiellement opposés dudit élément de vanne à boisseau sphérique (24), pouvant venir en prise dans au moins une fente s'étendant circonférentiellement (68) dans ladite cartouche (26).

3. Cartouche pour vanne à boisseau sphérique (26) selon la revendication 2, dans laquelle lesdites saillies (62) sont formées par une cheville (60) s'étendant à travers ledit élément de vanne à boisseau sphérique (24).

4. Cartouche pour vanne à boisseau sphérique (26) selon la revendication 3, dans laquelle ladite cheville (60) a un agencement frictionnel avec une surface inférieure (67) de ladite au moins une fente s'étendant circonférentiellement (68).

5. Cartouche pour vanne à boisseau sphérique (26) selon l'une quelconque des revendications précédentes, dans laquelle ledit boîtier de cartouche (56) a un siège d'étanchéité (94) agencé autour de ladite ouverture supérieure (58), un joint d'étanchéité (98) étant positionné dans ledit siège d'étanchéité (94), qui peut venir en butée de manière étanche contre ledit élément de vanne à boisseau sphérique (24).

6. Cartouche pour vanne à boisseau sphérique (26) selon la revendication 5, dans laquelle ledit joint d'étanchéité (98) a une lèvre dirigée radialement vers l'intérieur (104) qui vient en butée de manière étanche contre ledit élément de vanne à boisseau sphérique (24).

7. Cartouche pour vanne à boisseau sphérique (26) selon la revendication 6, dans laquelle ledit joint d'étanchéité (98) est préchargé de telle sorte que ladite lèvre (104) est rappelée contre ledit élément de vanne à boisseau sphérique (24).

8. Cartouche pour vanne à boisseau sphérique (26) selon l'une quelconque des revendications 5 à 7, dans laquelle ledit siège d'étanchéité (94) est incliné, sa périphérie intérieure (95) étant positionnée au-dessus de sa périphérie extérieure (96), et dans laquelle ledit joint d'étanchéité (98) a une position non-chargée dans laquelle ses périphéries intérieure et extérieure (100, 102) sont approximativement coplanaires, ledit joint d'étanchéité (98), lorsqu'il est préchargé, étant déformé de telle sorte que ladite périphérie intérieure de joint (100) soit au-dessus de sa périphérie extérieure (102), et en position dans ledit siège d'étanchéité incliné (94).

9. Cartouche pour vanne à boisseau sphérique (26) selon l'une quelconque des revendications précédentes, dans laquelle ledit boîtier de cartouche (56) a un anneau d'étanchéité extérieur (112) agencé autour de celui-ci, pour empêcher une fuite autour de ladite cartouche (26).

10. Cartouche pour vanne à boisseau sphérique (26) selon l'une quelconque des revendications précédentes, comportant de plus un élément de gabarit (120) monté dans une cavité supérieure (122) dudit boîtier de cartouche (56) à proximité de ladite ouverture supérieure (58) pour limiter le mouvement de basculement et le mouvement orbital de ladite tige de commande (42).

11. Vanne mitigeuse ou mitigeur de robinet (10) ayant un élément de vanne mobile (24) monté dans un boîtier (12) qui définit une cavité (22), ledit boîtier (12) ayant plusieurs orifices d'entrée (18, 19) et un orifice de sortie (20) en communication hydraulique avec ladite cavité (22), ledit élément de vanne (24) coopérant avec lesdits orifices d'entrée (18, 19) pour commander l'écoulement de liquide en ce qui concerne à la fois le débit et la température du mélange à travers lesdits orifices, ledit boîtier (12) ayant une ouverture de commande (40) le traversant, ledit élément de vanne (24) ayant une tige de commande (42) reliée à celui-ci et s'étendant à travers ladite ouverture de commande (40), caractérisé en ce que
ledit mitigeur (10) est du type à cartouche, la cartouche (26) ayant un élément de boîtier (56),
ledit élément de boîtier (56) ayant une ouverture supérieure (58) pour permettre à ladite tige de commande (42) de passer à travers celui-ci,
des moyens (60, 68) pour mettre en place ledit élément de vanne mobile (24) sur ledit élément de boîtier (56),
ladite cartouche (26) ayant une ouverture inférieure (92) à travers laquelle fait saillie ledit élément de vanne mobile (24) pour venir en coopération avec lesdits orifices d'entrée (18, 19),
ledit élément de boîtier (56) ayant au moins un siège (94) d'étanchéité autour de ladite ouverture supérieure (58),
un joint d'étanchéité (98) positionné dans ledit siège d'étanchéité (94) autour de ladite ouverture supérieure (58) dudit élément de boîtier (56) et pouvant venir en butée de manière étanche contre ledit élément de vanne mobile (24).

12. Mitigeur de robinet (10) selon la revendication 11, caractérisé en ce que ledit mitigeur (10) est du type à cartouche de vanne à boisseau sphérique, la cartouche de vanne à boisseau sphérique (26) étant selon l'une quelconque des revendications 1 à 10.
